(19) **Europäisches Patentamt / European Patent Office / Office européen des brevets**

(11) **EP 3 158 343 B1**

(12) **FASCICULE DE BREVET EUROPEEN**

(45) Date de publication et mention de la délivrance du brevet:
**23.03.2022 Bulletin 2022/12**

(21) Numéro de dépôt: **15731277.8**

(22) Date de dépôt: **17.06.2015**

(51) Classification Internationale des Brevets (IPC):
**G01P 13/00** *(2006.01)*   **G08B 13/08** *(2006.01)*
**G08B 29/18** *(2006.01)*   **G01P 15/08** *(2006.01)*

(52) Classification Coopérative des Brevets (CPC):
**G01P 13/00; G08B 13/08; G08B 29/181**

(86) Numéro de dépôt international:
**PCT/EP2015/063548**

(87) Numéro de publication internationale:
**WO 2015/193349 (23.12.2015 Gazette 2015/51)**

(54) **DISPOSITIF DOMOTIQUE ET PROCÉDÉ ÉCONOMES EN ÉNERGIE DE SUIVI DU DÉPLACEMENT D'UN OBJET SURVEILLÉ**

ENERGIEEFFIZIENTE DOMOTIKVORRICHTUNG UND VERFAHREN ZUR VERFOLGUNG DER BEWEGUNG EINES ZU ÜBERWACHENDEN OBJEKTS

ENERGY-EFFICIENT HOME-AUTOMATION DEVICE AND METHOD FOR TRACKING THE DISPLACEMENT OF A MONITORED OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2014 FR 1455707**

(43) Date de publication de la demande:
**26.04.2017 Bulletin 2017/17**

(73) Titulaire: **Somfy Protect by Myfox**
**31670 Labège (FR)**

(72) Inventeurs:
• **PRUNET, Jean-Marc**
**75007 Paris (FR)**

• **FOURNIOLS, Jean-Yves**
**31130 Quint-Fonsegrives (FR)**
• **NIECERON, Franck**
**82000 Montauban (FR)**

(74) Mandataire: **Lavoix**
**62, rue de Bonnel**
**69448 Lyon Cedex 03 (FR)**

(56) Documents cités:
EP-A2- 1 981 010     WO-A1-2007/048908
WO-A1-2015/007969    US-A1- 2010 019 902
US-A1- 2013 000 406   US-A1- 2013 057 405
US-B2- 6 940 405

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un dispositif permettant de détecter le déplacement d'un objet, dit objet surveillé, de façon fiable. L'invention permet notamment un suivi de la position d'un ouvrant.

Dans tout le texte, le terme « déplacement » désigne soit le mouvement d'un objet surveillé qui le fait changer de position, soit le résultat de ce mouvement, c'est-à-dire la position - notamment la position instantanée par rapport à une position de référence - de cet objet surveillé. Le terme déplacement vise donc la position et/ou la vitesse et/ou l'accélération (y compris les chocs) d'un objet surveillé.

La surveillance du déplacement d'un objet, notamment d'un ouvrant, est essentielle dans un dispositif de domotique. Tel est particulièrement le cas dans un dispositif d'alarme contre les intrusions et les effractions. Il est nécessaire en particulier que la position d'un ouvrant soit à tout moment déterminée,
notamment lorsque le dispositif domotique d'alarme est armé, ou suite à une effraction.

WO2007/048908 décrit un procédé de traitement de mesures d'accélération délivrées par un accéléromètre et son application à un système d'alarme. Ce procédé qui ne se fonde que sur des signaux accélérométriques ne permet pas de discriminer de façon fiable différents types de déplacement de l'objet surveillé vis-à-vis de la nécessité ou non d'émettre des signaux d'alarme, notamment si le déplacement d'un objet surveillé correspond ou non à une effraction avec succès sur l'objet surveillé.

US2010/0019902 décrit un système portable de sécurité comprenant une unité de détection comportant un détecteur de position et un détecteur d'activité permettant de détecter le mouvement propre de l'unité de détection ou une activité. Le détecteur de position peut comporter un compas numérique, un compas analogique, un compas à deux axes, un interrupteur de tilt et/ou un accéléromètre multiaxe permettant de détecter des changements dans la position angulaire et/ou dans le mouvement linéaire d'une fenêtre ou d'une porte. Le détecteur d'activité peut aussi comprendre un accéléromètre. Ce système ne permet pas non plus de discriminer de façon fiable différents types de déplacement de l'objet surveillé vis-à-vis de la nécessité ou non d'émettre des signaux d'alarme, notamment si le déplacement d'un objet surveillé correspond ou non à une effraction avec succès sur l'objet surveillé.

EP 1981010 décrit un procédé pour détecter une effraction sur un verrou de porte par détection de l'énergie reçue et analyse de cette dernière par rapport à une signature d'énergie. Ce procédé qui ne se fonde que sur une analyse d'énergie particulièrement complexe ne permet pas non plus de discriminer de façon fiable différents types de déplacement de l'objet surveillé vis-à-vis de la nécessité ou non d'émettre des signaux d'alarme, notamment si le déplacement d'un objet surveillé correspond ou non à une effraction avec succès sur l'objet surveillé.

US 2013/0057405 décrit l'utilisation d'un accéléromètre et/ou d'un gyroscope et prétend que l'intégration des signaux délivrés par ces détecteurs permettrait de déterminer la position d'une porte ou d'une fenêtre, ce qui n'est pas exact en l'absence de référence de position initiale. En outre, ce procédé qui ne se fonde que sur des signaux accélérométriques ne permet pas non plus de discriminer de façon fiable différents types de déplacement de l'objet surveillé vis-à-vis de la nécessité ou non d'émettre des signaux d'alarme, notamment si le déplacement d'un objet surveillé correspond ou non à une effraction avec succès sur l'objet surveillé.

US 6,940,405 décrit un système d'alarme qui allie un capteur de champ magnétique à un capteur inertiel. Ainsi, le déplacement d'un objet pivotant peut être détecté soit par détection d'une accélération instantanée de l'objet correspondant à une ouverture et/ou à des chocs, soit, en l'absence de détection d'une accélération anormale par le capteur inertiel (c'est-à-dire en présence d'un déplacement lent de l'objet), en détectant un changement d'orientation de l'objet grâce au capteur de champ magnétique.

Pour être adaptés à un usage en tant que détecteur d'un dispositif domotique, de tels détecteurs doivent être les plus discrets et légers possibles, tout en restant de coût raisonnable et à basse consommation énergétique pour être autonomes.

Cependant les magnétomètres disponibles pour ce type d'applications consomment une quantité relativement importante d'énergie qui les rend peu compatibles avec des impératifs de discrétion, de légèreté et d'alimentation électrique par une pile ou une batterie, notamment une pile de petites dimensions.

L'invention vise donc à pallier ces inconvénients.

L'invention vise à proposer un dispositif peu gourmand en énergie, et qui soit donc autonome énergétiquement.

L'invention vise également à proposer un tel dispositif qui soit peu volumineux, peu coûteux, et malgré tout fiable.

L'invention vise à proposer un dispositif domotique et un procédé de fonctionnement d'un détecteur de déplacement d'un tel dispositif domotique permettant de discriminer de façon fiable différents types de déplacement de l'objet surveillé vis-à-vis de la nécessité ou non d'émettre des signaux d'alarme, notamment si le déplacement d'un objet surveillé correspond ou non à une effraction avec succès sur l'objet surveillé.

Elle vise en particulier à proposer un dispositif domotique et un procédé de fonctionnement d'un détecteur de déplacement d'un tel dispositif domotique permettant de déterminer de façon fiable si un objet surveillé est déplacé ou a été déplacé par rapport à une orientation de référence, notamment s'il a été déplacé suite à un choc.

L'invention vise notamment à proposer un dispositif domotique permettant de déterminer si un battant est ouvert ou fermé.

L'invention, vise en outre à proposer un dispositif pouvant surveiller une pluralité d'ouvrants battants, dans tous types de lieux.

L'invention vise aussi un procédé de fonctionnement d'un détecteur de déplacement d'un tel dispositif domotique, permettant de limiter l'énergie consommée par ledit détecteur de déplacement.

L'invention est définie par les revendications indépendantes. Des modes de réalisation préférés sont revendiqués dans les revendications dépendantes.

L'invention permet d'obtenir un détecteur de déplacement très économe en énergie. En effet, la fréquence d'acquisition, dite fréquence basse, des signaux d'orientation peut être choisie particulièrement basse de façon à économiser au maximum l'énergie consommée par un tel détecteur.

La plupart des objets surveillés sont en effet immobiles la plupart du temps, de sorte qu'il est inutile de gaspiller de l'énergie en surveillant leur position à très haute fréquence.

Néanmoins, un détecteur de déplacement reste particulièrement fiable pour détecter le déplacement d'un objet. En effet, dans le cadre de l'invention, en cas de déplacement très lent (sous le seuil de détection accélérométrique) de l'objet surveillé, la fréquence basse du capteur d'orientation est choisie de façon à permettre la détection d'un changement d'orientation de l'objet.

La fréquence basse est à cet effet avantageusement choisie comprise entre 0.05 Hz et 4 Hz, notamment entre 0.2Hz et 2Hz. Dans le cas d'un objet surveillé tel qu'un ouvrant (porte ou fenêtre) la fréquence basse est avantageusement de l'ordre de 0.2 Hz.

Bien qu'un déplacement de l'objet surveillé plus rapide que la fréquence basse (par exemple une ouverture rapide suivie d'une fermeture rapide d'un ouvrant) ne pourrait pas être détecté à partir des signaux d'orientation fournis par le détecteur d'orientation acquis à la fréquence basse, les signaux d'accélération fournis par l'accéléromètre permettent eux, de détecter un tel déplacement rapide car l'accélération de l'objet est alors importante. La fréquence d'échantillonnage, dite fréquence d'accéléromètre, de l'accéléromètre est avantageusement choisie plus élevée que la fréquence basse, d'échantillonnage du capteur d'orientation. En effet, un accéléromètre consomme actuellement moins d'énergie qu'un capteur d'orientation tel qu'un magnétomètre par exemple.

La fréquence d'accéléromètre est avantageusement choisie entre 2Hz et 60Hz, plus particulièrement entre 2Hz et 5Hz.

Avantageusement, l'unité de traitement est programmée pour, sur détection d'un événement de déclenchement, acquérir des signaux d'orientation fournis par le capteur d'orientation à une troisième fréquence d'échantillonnage, dite fréquence haute, de valeur supérieure à ladite fréquence basse d'acquisition de signaux d'orientation.

La fréquence haute est choisie pour pouvoir suivre l'orientation de l'objet surveillé de façon précise. À cet effet la fréquence haute est avantageusement choisie comprise entre 1 Hz et 100 Hz, plus particulièrement entre 30 Hz et 80 Hz, notamment de l'ordre de 50 Hz. Ainsi, tant que l'objet est immobile le détecteur de déplacement consomme peu d'énergie. En revanche, lorsqu'un déplacement de l'objet est détecté grâce à l'accéléromètre, une surveillance très précise des déplacements de l'objet est obtenue par un dispositif selon l'invention.

Avantageusement l'unité de traitement est programmée pour, sur détection d'un événement de déclenchement, acquérir des signaux d'accélération fournis par l'accéléromètre à une quatrième fréquence d'échantillonnage, dite fréquence d'alerte, de valeur supérieure à ladite fréquence d'accéléromètre.

Ainsi, les mesures de l'accélération sont aussi plus précises et permettent une évaluation plus exacte de l'énergie de déplacement.

Ladite fréquence d'alerte est avantageusement comprise entre 5Hz et 50Hz, notamment entre 15Hz et 30Hz, plus particulièrement avantageusement de l'ordre de 25Hz.

Avantageusement, l'unité de traitement est programmée pour pouvoir identifier un événement de déclenchement dans lequel les signaux d'accélération sont représentatifs d'une valeur d'accélération supérieure à une valeur de déclenchement prédéterminée.

La détection d'une accélération de valeur supérieure (en amplitude) à la valeur de déclenchement déclenche avantageusement une acquisition immédiate des signaux d'orientation du capteur d'orientation indépendamment de ladite fréquence basse. La détection d'une accélération de valeur absolue supérieure à la valeur de déclenchement permet notamment de détecter un choc sur l'objet surveillé.

En variante ou en combinaison, rien n'empêche que l'événement de déclenchement soit identifié par comparaison d'autres facteurs représentatifs d'une variation de l'accélération à une valeur de déclenchement : dérivée temporelle première de l'accélération approximée par exemple par une différence entre deux mesures successives, intégrale ou somme temporelle de l'accélération, etc.

En variante ou en combinaison conforme à l'invention, l'unité de traitement peut être programmée pour comparer une ou plusieurs valeurs d'accélération à une ou plusieurs valeurs de déclenchement, de façon par exemple à détecter un événement de déclenchement prédéterminé pouvant être reconnu à partir d'un profil des signaux d'accélération. En particulier, un événement de déclenchement prédéterminé peut correspondre à un profil particulier de valeurs et/ou de variations de l'accélération, dont la détection est basée sur une suite de comparaisons des valeurs de l'accélération à différentes valeurs de déclenchement, le cas échéant à des intervalles de temps prédéterminés.

De plus, en variante ou en combinaison conforme à l'invention, l'unité de traitement peut être programmée pour comparer les valeurs d'accélération à plusieurs valeurs de déclenchement distinctes, chaque valeur de déclenchement étant choisie en fonction d'un critère prédéterminé. Un tel critère prédéterminé est par exemple le sens de déplacement de l'objet surveillé, par exemple le sens de translation d'un ouvrant coulissant. Chaque valeur de déclenchement est ainsi adaptée à la spécificité du mouvement étudié.

Les signaux d'orientation correspondant à l'orientation initiale et à l'orientation finale peuvent être acquis de façon ponctuelle indépendamment et en plus des acquisitions réalisées à ladite fréquence basse, ou être choisie parmi les acquisitions réalisées à ladite fréquence haute.

Ainsi, avant même de calculer l'énergie du choc ou du déplacement détecté à partir des signaux d'accélération, l'unité de traitement acquiert des signaux d'orientation lui permettant de déterminer l'orientation initiale instantanée du boîtier et la stocke dans une mémoire. L'unité de traitement détermine ladite orientation initiale à partir desdits signaux d'orientation.

De même, après qu'une durée déterminée, dite durée d'attente, se soit écoulée à partir de l'acquisition de l'orientation initiale, notamment après ladite durée d'attente à partir de l'événement de déclenchement, l'unité de traitement acquiert immédiatement des signaux d'orientation lui permettant de déterminer l'orientation finale instantanée du boîtier et la stocke dans une mémoire. L'unité de traitement détermine ladite orientation finale à partir desdits signaux d'orientation.

Ladite durée d'attente peut par exemple être enregistrée en mémoire. Ladite durée d'attente peut être choisie en fonction du type d'objet surveillé : par exemple dans le cas d'un ouvrant, elle est choisie pour être inférieure à une durée minimale d'ouverture puis de fermeture de l'ouvrant autorisant le passage d'une personne pendant que la porte est ouverte. Dans le cas d'un ouvrant ladite durée d'attente est par exemple avantageusement comprise entre 0,1 seconde et 2 secondes, notamment entre 0,5 seconde et 1,5 seconde.

Ladite durée d'attente correspond avantageusement à la durée de traitement, par l'unité de traitement, des signaux d'accélération permettant de déterminer ladite énergie de déplacement.

Avantageusement, l'unité de traitement est programmée pour déterminer l'orientation initiale:

- en déterminant une pluralité d'orientations à partir de signaux d'orientation acquis à haute fréquence juste après détection d'une valeur d'accélération supérieure à la valeur de déclenchement, puis en
- réalisant une moyenne de cette pluralité d'orientations pour obtenir ladite orientation initiale.

L'unité de traitement est avantageusement programmée pour déterminer l'orientation finale de la même manière.

Les orientations initiale et finale sont ainsi particulièrement fiables car le fait de réaliser une moyenne sur plusieurs mesures permet de s'affranchir d'une mesure incorrecte ponctuelle de l'orientation.

Selon l'invention, l'unité de traitement est programmée pour comparer ladite orientation finale et ladite orientation initiale.

Selon que le résultat de la comparaison entre orientation initiale et orientation finale est nul ou non-nul, l'unité de traitement peut déterminer si la ou les accélérations (par exemple un choc) subies par l'objet surveillé ont eu pour effet de déplacer l'objet surveillé ou non. Cela permet de corroborer, ou non, le résultat de la comparaison entre énergie de déplacement et valeur de graduation.

Avantageusement, l'unité de traitement est programmée pour comparer le résultat de la différence entre orientation finale et orientation initiale avec une valeur de seuil prédéterminée enregistrée dans une mémoire. Cela permet de négliger des déplacements mineurs de l'objet surveillé entre orientation initiale et orientation finale qui peuvent être due à des variations faibles du champ magnétique local, ou à un déplacement mineur de l'objet (par exemple dû à un jeu de montage d'un ouvrant sur un dormant).

Avantageusement l'unité de traitement détermine le signe de la différence entre orientation initiale et orientation finale.

Le signe, positif ou négatif, de la différence entre orientation initiale et orientation finale permet à l'unité de traitement de déterminer le sens dans lequel l'objet surveillé a été déplacé. Plus particulièrement lorsque l'objet surveillé est un ouvrant, cela permet de déterminer si l'ouvrant a été ouvert ou s'il a été fermé par la ou les accélérations (et/ou chocs) subies par l'ouvrant ; cela permet en particulier de connaître sa position exacte suite à l'occurrence d'un événement de déclenchement.

L'unité de traitement est adaptée pour élaborer des signaux représentatifs de messages à destination d'un autre dispositif électronique ou d'un utilisateur humain, comprenant des informations relatives à la comparaison entre orientation finale et orientation initiale et/ou à la comparaison de la différence entre orientation finale et orientation initiale et une valeur de seuil et/ou entre valeur d'énergie et une ou plusieurs valeurs d'énergie prédéterminées. Avantageusement, si la différence entre orientation initiale et orientation finale est supérieure à ladite valeur de seuil, l'unité de traitement élabore un message à destination d'un autre dispositif telle qu'une unité centrale d'alarme et/ou à destination d'une interface homme/machine.

Ainsi, dans un dispositif selon l'invention la détection d'un déplacement par traitement des signaux d'accélération fournis par l'accéléromètre peut être confirmée par la détection d'un déplacement par traitement des signaux d'orientation fournis par le capteur d'orientation. L'invention permet d'obtenir un détecteur de déplacement permettant de discerner de façon fiable un ou plusieurs chocs reçus par l'objet surveillé mais sans déplacement de celui-ci, qui correspond par exemple à un cas de tentative d'effraction sans succès sur une porte, et un ou plusieurs chocs reçus par l'objet surveillé ayant pour effet un déplacement de celui-ci, qui correspond par exemple à un cas d'effraction avec ouverture sur une porte. L'invention permet aussi d'obtenir un détecteur de déplacement particulièrement fiable lorsqu'il s'agit de surveiller les déplacements d'un objet surveillé, par exemple dans le cadre de la surveillance d'une porte d'un local dans lequel se trouvent des enfants.

L'unité de traitement est programmée pour, sur détection d'un événement de déclenchement, calculer ladite énergie de déplacement au moins à partir des signaux d'accélération fournis par l'accéléromètre. Plus particulièrement, l'unité de traitement est programmée pour calculer ladite énergie de déplacement à partir des signaux d'accélération acquis pendant une durée, dite durée de calcul, prédéterminée après la détection d'une valeur d'accélération supérieure à la valeur de déclenchement.

WO2007048908 expose des exemples de méthodes de traitement des signaux d'accélération de l'accéléromètre pouvant être mises en œuvre dans le cadre de la présente invention. L'application d'une fonction impaire aux signaux d'accélération permet notamment de sélectionner des signaux d'accélération représentatifs d'accélérations uniquement dans un sens déterminé selon une direction de mesure et d'éliminer des accélérations dans un sens opposé selon la même direction de mesure.

Avantageusement, le calcul de ladite énergie de déplacement comprend une somme quadratique temporelle d'accélérations.

Avantageusement, le calcul de ladite énergie de déplacement comprend :

- une moyenne mobile d'accélération à partir d'une pluralité de signaux d'accélération,
- une différence entre moyenne mobile d'accélération et une valeur, dite valeur continue, prédéterminée enregistrée en mémoire sous forme de données,
- une somme quadratique d'une pluralité de différences entre une pluralité de moyennes mobiles d'accélération décalées dans le temps et ladite valeur continue.

Par somme quadratique il est entendu une somme de termes élevés au carré.

Plus particulièrement, le calcul de ladite énergie de déplacement comprend une opération du type:

$$E_{dép} = \sqrt{(A_x^2 + A_y^2 + A_z^2)}$$

avec
Ax, Ay, Az des valeurs calculées sur chaque axe de mesure d'un accéléromètre trois axes telles que :

$$A_x = \sum_{i=1}^{p} \left( \left( \frac{1}{n} \sum_{j=0}^{n-1} x_{i-j} \right) - REFx \right)^2$$

avec

$x_i$ des valeurs d'accélération sur un axe de mesure x, successives à une fréquence d'échantillonnage donnée, auxquelles une fonction impaire a été appliquée,
$p$ et $n$ des nombres entiers prédéterminés,
REFx une valeur prédéterminée pour l'axe x, enregistrée en mémoire.

Les valeurs REFx, REFy, REFz correspondent avantageusement aux valeurs de la gravité locale selon chacun des axes de mesure d'un accéléromètre à trois axes de mesure.

L'entier n est choisi pour effectuer une moyenne mobile sur n points de mesures d'accélération. Ladite moyenne mobile permet de filtrer les vibrations mesurées par l'accéléromètre.

L'entier p correspond à un nombre de valeurs sommées, donc à une durée, dite durée de calcul, en fonction de la fréquence d'échantillonnage, sur laquelle des signaux d'accélération sont acquis pour déterminer ladite énergie de déplacement.

Les formules présentées sont similaires dans le cas d'un accéléromètre à deux axes de mesure ou à un axe de mesure.

La durée de calcul Tcal est égale à :

$$Tcal = \frac{p}{f_{ac}}$$

avec p ledit entier,

$f_{ac}$ la fréquence d'acquisition des signaux d'accélération.

L'entier p ou la durée de calcul Tcal est enregistré en mémoire. Dans le cas d'un ouvrant, ladite fréquence d'acquisition $f_{ac}$ est avantageusement ladite fréquence d'alerte.

Avantageusement, ladite durée d'attente est choisie égale à ladite durée de calcul.

Ladite énergie de déplacement est une valeur représentative d'une quantité d'énergie reçue par l'objet surveillé pendant la durée de calcul selon au moins un sens selon au moins une direction de mesure, bien qu'elle ne soit pas nécessairement physiquement homogène à une énergie. Ladite énergie de déplacement est une valeur représentative d'un cumul d'accélérations dues à un choc et/ou des accélérations subies par l'objet surveillé au cours de ladite durée de calcul.

Selon l'invention, l'unité de traitement est programmée pour comparer ladite énergie de déplacement à une valeur, dite valeur de graduation, prédéterminée. L'unité de traitement d'un détecteur de déplacement est programmée pour comparer la valeur ainsi obtenue, dite énergie de déplacement Edép, calculée à partir des valeurs d'accélération, à une valeur, dite valeur de graduation, prédéterminée enregistrée en mémoire. Avantageusement ladite valeur de graduation est adaptée pour qu'une valeur d'énergie de déplacement supérieure à ladite valeur de graduation corresponde à un choc -notamment à une effraction avec succès- sur l'objet surveillé, par exemple une effraction avec ouverture sur un ouvrant. Ladite valeur de graduation est avantageusement adaptée en fonction de l'objet surveillé.

Ladite valeur de graduation est avantageusement enregistrée sous forme de données numériques dans une mémoire.

La valeur de graduation correspond par exemple au résultat d'un calcul d'énergie de déplacement pour un choc d'une intensité donnée.

Avantageusement,

- la mémoire comprend des données représentatives d'une pluralité de valeurs de graduation distinctes prédéterminées,
- l'unité de traitement est programmée pour comparer ladite énergie de déplacement à plusieurs valeurs de graduation.

Ainsi, ladite énergie de déplacement peut être classée sur une échelle de valeurs prédéterminées, de façon à en quantifier l'intensité. L'unité de traitement est avantageusement programmée pour pouvoir élaborer et transmettre des signaux représentatifs d'un message en fonction du niveau de ladite énergie de déplacement. Ledit message contient avantageusement une information sur le niveau de ladite énergie de déplacement. Ainsi, dans le cadre d'un dispositif domotique d'alarme, une agression sur un objet surveillé peut être classée sur une échelle de valeurs et permettre de distinguer une tentative d'effraction sans succès d'une effraction réussie.

Selon l'invention, l'unité de traitement est programmée pour effectuer une opération, dite opération de corrélation, comprenant au moins une comparaison du résultat de la comparaison entre orientation finale et orientation initiale, et du résultat de la comparaison entre ladite énergie de déplacement et au moins une valeur ou avantageusement plusieurs valeurs de graduation.

Ainsi, bien que le résultat de la comparaison entre ladite énergie de déplacement et au moins une valeur de graduation soit généralement suffisant pour déterminer si un objet surveillé a été déplacé ou non, l'acquisition des orientations initiale et finale et la comparaison entre orientation finale et orientation initiale permet de confirmer de façon certaine si un objet surveillé a été déplacé ou non, ainsi que de confirmer dans quel sens il a été déplacé. En particulier, dans le cas d'un ouvrant, l'énergie de déplacement peut dépasser un seuil déterminé à cause d'une pluralité de chocs rapprochés (dans la durée de calcul) mais chacun d'intensité trop faible pour provoquer l'ouverture par effraction de l'ouvrant : dès lors la mesure de l'orientation initiale et de l'orientation finale permet d'infirmer l'information donnée par l'énergie de déplacement et permet à au dispositif domotique et/ou à un utilisateur de savoir que l'ouvrant n'a pas changé de position (est resté fermé par exemple).

Avantageusement, le capteur d'orientation comprend un magnétomètre fixé au boîtier et adapté pour fournir des signaux d'orientation représentatifs de l'orientation instantanée d'au moins une direction fixe du boîtier par rapport à un champ magnétique terrestre local.

Un détecteur de déplacement est donc adapté pour mesurer l'orientation d'un objet par rapport à la direction du champ magnétique terrestre local. Un détecteur de déplacement est donc adapté pour mesurer l'orientation d'un objet par rapport à une orientation de référence, enregistrée en mémoire, par rapport à la direction du champ magnétique terrestre local (par exemple l'orientation d'une porte fermée sur son dormant).

Le traitement des signaux d'orientation fournis par le magnétomètre indiquant l'orientation du boîtier du détecteur de déplacement par rapport à la direction du champ magnétique terrestre local permet de déduire la position angulaire d'un objet surveillé sur lequel ledit boîtier est fixé par rapport à une position angulaire de référence connue qui correspond à une orientation mémorisée de l'objet surveillé par rapport à la direction du champ magnétique terrestre local.

De plus, avantageusement, le magnétomètre est un magnétomètre trois axes adapté pour fournir des signaux d'orientation représentatifs de l'orientation instantanée de trois directions fixes du boîtier par rapport à la direction du champ magnétique terrestre local.

Un magnétomètre trois axes permet notamment de détecter l'orientation d'un ouvrant pivotant autour d'un axe quelconque d'un référentiel terrestre. Un tel magnétomètre permet de détecter l'orientation d'un battant par rapport à la direction du champ magnétique terrestre, plus précisément par rapport à la direction du champ magnétique local qui peut être légèrement différent de la direction du nord ou du sud magnétique terrestre à cause de perturbations locales du champ magnétique dues par exemple à d'autres composant du détecteur de déplacement, ou à l'environnement électromagnétique dans lequel le détecteur de déplacement est installé. Un capteur d'orientation comprenant un tel magnétomètre est particulièrement adapté pour des ouvrants montés rotatifs autour d'un axe vertical. Cependant, il permet aussi de détecter l'orientation d'un ouvrant pivotant autour d'un axe horizontal par rapport à un dormant, ou autour d'un axe incliné quelconque par rapport à un dormant.

De plus, le magnétomètre est avantageusement un magnétomètre miniature, par exemple du type circuit intégré magnétométrique. De même, l'accéléromètre est avantageusement miniaturisé.

Avantageusement, l'accéléromètre est un accéléromètre trois axes adapté pour fournir des signaux d'accélération représentatifs de mesures d'accélérations instantanées du boîtier dans un référentiel terrestre.

Avantageusement, l'accéléromètre ou l'unité de traitement corrigent l'influence de l'accélération de la gravité terrestre.

Conformément à l'invention, on peut choisir un composant unique assurant les fonction de magnétomètre et d'accéléromètre.

De plus, avantageusement le détecteur de déplacement comprend en outre des moyens d'émission sans fil de signaux.

Plus particulièrement, le détecteur de déplacement comprend avantageusement des moyens d'émission sans fil de signaux selon un protocole de communication sans fil de proximité, c'est-à-dire pouvant atteindre une distance maximale inférieure à 200m, par exemple selon un protocole de communication Wifi.

Alternativement ou en combinaison, le détecteur de déplacement comprend des moyens d'émission sans fil de signaux selon un protocole de communication sans fil à longues distances, c'est-à-dire pouvant atteindre une distance maximale supérieure à 200m, par exemple selon un protocole de communication GSM, GPRS, UMTS ou équivalent suffisant à la mise en œuvre de l'invention.

Avantageusement le détecteur de déplacement est adapté pour pouvoir élaborer et émettre sans fil des signaux représentatifs de l'orientation de l'objet, notamment d'un changement d'orientation du boîtier par rapport à un état précédent.

L'unité de traitement de chaque détecteur de déplacement est adaptée pour pouvoir émettre des messages, dit messages d'état, représentatifs au moins de l'orientation d'un objet surveillé auquel ledit détecteur de déplacement est fixé. Par exemple, l'unité de traitement du détecteur de déplacement est adaptée pour envoyer des messages d'état représentatifs d'un état « ouvert », d'un état « fermé », ou d'un état « en mouvement » du battant.

Un dispositif selon l'invention est de plus avantageusement caractérisé en ce qu'il comprend une unité centrale adaptée pour recevoir sans fil des signaux émis par un détecteur de déplacement. Une telle unité centrale est notamment adaptée pour pouvoir recevoir des signaux sans fil de proximité.

Avantageusement, un dispositif domotique selon l'invention comprend au moins une unité centrale et une pluralité de détecteurs de déplacement selon l'invention. Ainsi, une pluralité de détecteurs de déplacement peut être disposée dans un local à surveiller, et l'unité centrale reçoit et traite des messages d'état émis par chaque détecteur de déplacement.

Dans certains modes de réalisation de l'invention, chaque détecteur de déplacement est adapté pour pouvoir émettre directement des signaux formant des messages d'état à une antenne distante d'un réseau de télécommunication de longue distance. Cette variante est utile notamment lorsque le dispositif domotique selon l'invention est dépourvu d'unité centrale.

L'unité centrale comprend une mémoire de programmation adaptée pour que l'unité centrale puisse fonctionner selon une pluralité de modes de fonctionnement.

En particulier, avantageusement l'unité centrale est adaptée pour pouvoir fonctionner selon un premier mode de fonctionnement, dit mode passif. Dans le cas d'un dispositif domotique d'alarme contre les intrusions et les effractions, le mode passif correspond à un mode de fonctionnement sans surveillance et sans déclenchement de moyens d'alarme.

Également, avantageusement l'unité centrale peut avantageusement être adaptée pour pouvoir fonctionner selon un deuxième mode de fonctionnement, dit mode actif, dans lequel l'unité centrale peut activer des moyens d'alarme, en fonction d'au moins un message reçu depuis un détecteur de déplacement et/ou d'autres détecteurs avec lesquels elle est en communication.

Dans le cas d'un dispositif domotique d'alarme contre les intrusions et/ou les effractions, le mode actif correspond à un mode de fonctionnement de surveillance avec déclenchement de moyens d'alarme en cas de détection d'un événement d'intrusion et/ou de tentative d'effraction et/ou d'effraction. L'unité centrale peut par exemple être adaptée pour émettre un signal de déclenchement d'une sirène d'alarme, pour émettre un message d'alerte à un utilisateur et/ou à une société de télésurveillance, pour émettre des signaux de déclenchement d'autres dispositifs (fermeture de portes, mise en marche d'une vidéo-surveillance, activation d'un diffuseur de gaz lacrymogène,...), etc.

Un dispositif domotique selon l'invention n'est pas nécessairement un dispositif d'alarme et peut avoir d'autres applications domotiques distinctes ou en combinaison avec l'application d'alarme. Par exemple un dispositif selon l'invention peut permettre de gérer la température d'un local (en connaissant l'état des ouvrants de ce local), d'aider à la surveillance de personnes (enfants, personnes âgées, ...), etc.

Avantageusement, l'unité centrale comprend au moins une mémoire adaptée pour pouvoir mémoriser des données représentatives d'une position de chaque objet surveillé. Par exemple, les données enregistrées dans une telle mémoire peuvent être représentatives d'un état « ouvert » ou « fermé » d'un ouvrant. Les données représentatives de l'état de la position d'un objet surveillé sont susceptibles d'être modifiées sur réception d'un message émis par un détecteur de déplacement.

Ainsi, avantageusement, si, lors du passage d'un mode passif à un mode actif de l'unité centrale, cette dernière reçoit au moins un signal représentatif du fait qu'un battant n'est pas dans son orientation de référence (par exemple « fermé »), l'unité centrale émet un signal d'information. Un tel signal d'information peut être émis à destination d'une interface utilisateur (écran, haut-parleur,...) et/ou d'un terminal (téléphone, tableau de contrôle du dispositif domotique,...). Ainsi, ce dispositif permet par exemple de prévenir un utilisateur qu'une fenêtre de son domicile est restée ouverte au moment où il quitte son domicile et active son dispositif domotique d'alarme.

En outre, avantageusement, l'unité centrale peut, sur requête d'un utilisateur, émettre un message d'information contenant l'état de l'ensemble des battants surveillés par des détecteurs de déplacement pouvant communiquer avec l'unité centrale.

Avantageusement, l'unité de traitement d'un détecteur de déplacement fonctionne de manière identique quel que soit le mode (passif/actif) de fonctionnement de l'unité centrale.

À des fins de simplicité et d'économie, un détecteur de déplacement peut être adapté pour uniquement émettre des signaux sans fil, sans pouvoir en recevoir.

Alternativement, un détecteur de déplacement peut être adapté pour communiquer en émission et en réception - notamment avec l'unité centrale - et émettre des signaux sur réception d'une requête - notamment émise par l'unité centrale-. Ainsi, un détecteur de déplacement peut par exemple émettre une information d'orientation de l'objet auquel il est fixé, sur requête de l'unité centrale. Avantageusement un échange bidirectionnel d'information entre unité centrale et détecteur de déplacement peut permettre un paramétrage du détecteur de déplacement (adaptation au type d'objet surveillé, notamment au type d'ouvrant ; adaptation des valeurs prédéterminées (seuils), ...).

Le boîtier d'un détecteur de déplacement selon l'invention peut être avantageusement adapté pour pouvoir être solidarisé à l'objet surveillé. Le boîtier comprend avantageusement des moyens de fixation sur un objet. Les moyens de fixation sont notamment adaptés pour que le détecteur puisse être monté entièrement solidaire de l'objet de façon à pouvoir détecter des accélérations, notamment des chocs, et des changements d'orientation de l'objet surveillé.

Plus particulièrement, ledit boîtier comprend des moyens de fixation sur un objet tels que le démontage du détecteur de déplacement par rapport à l'objet requiert de déplacer ledit boîtier avec une accélération et/ou un changement d'orientation adaptés pour détecter par l'unité de traitement et, le cas échéant, déclencher une alarme. Cela permet de détecter une tentative d'arrachement ou un arrachement du détecteur.

De plus, avantageusement, un détecteur de déplacement selon l'invention est avantageusement doté d'une source d'énergie autonome. Ainsi, détecteur de déplacement selon l'invention peut avantageusement être doté d'une pile, rechargeable ou non. Alternativement ou en combinaison il peut être doté d'une cellule photovoltaïque. Un détecteur de déplacement selon l'invention peut avantageusement être exempt de fil et peut ainsi librement et discrètement être fixé sur tout objet.

Un détecteur selon l'invention est particulièrement adapté pour pouvoir fonctionner durablement uniquement avec l'énergie d'une petite pile de type pile bouton par exemple. En effet, les objets surveillés sont souvent des objets qui sont plus longtemps immobiles qu'en mouvement (œuvre d'art, ouvrant, etc.), de sorte que la majeur partie du temps les signaux d'orientation sont acquis à la fréquence basse, permettant ainsi de limiter la consommation énergétique d'un détecteur de déplacement selon l'invention.

L'invention s'étend également à un procédé mis en œuvre dans un dispositif selon l'invention comme revendiqué.

Pour une unité de traitement donnée, le calcul de l'énergie dure une durée déterminée, de sorte que la position finale est toujours mesurée à un intervalle de temps fixe après la mesure de la position initiale.

De plus, avantageusement, sur détection d'un événement de déclenchement, l'unité de traitement acquiert des signaux d'orientation fournis par le capteur d'orientation à une troisième fréquence d'échantillonnage, dite fréquence haute, de valeur supérieure à ladite fréquence basse.

Avantageusement, l'unité de traitement produit ensuite des données représentatives d'un message dont le contenu est fonction de la comparaison entre la position finale et la position initiale et/ou fonction de la comparaison entre énergie de déplacement et valeur de graduation.

Plus particulièrement, l'unité de traitement compare la différence entre la position finale et la position initiale à une valeur seuil enregistrée en mémoire. Lorsque la différence est supérieure à cette valeur seuil, cela correspond à un déplacement de l'objet surveillé par rapport à sa position initiale.

Dans le cas d'un ouvrant, lorsque la position initiale est une position fermée, cela permet de détecter si l'accélération subie - un ou plusieurs chocs d'effraction par exemple - a été suivie d'une ouverture de l'ouvrant.

Calculer l'énergie de l'accélération/du choc subi par l'objet surveillé et comparer la position initiale et la position finale permet de réaliser une double vérification de l'état de l'ouvrant : en effet l'énergie d'un choc permet en théorie de déterminer si l'objet a été déplacé, de même que la comparaison entre position initiale et position finale. Ainsi, dans un procédé selon l'invention, la position de l'objet surveillé après une accélération, notamment une accélération de type choc, est particulièrement fiable.

Ainsi, un détecteur de déplacement selon l'invention permet, grâce au traitement des signaux d'accélération, de détecter une tentative d'effraction avant même qu'il y ait effraction sur l'objet surveillé, notamment sur un ouvrant, et de confirmer après une telle détection si la tentative d'effraction a abouti à une effraction effective ou non.

L'invention s'étend à un programme d'ordinateur comprenant des instructions de code de programme selon la revendication 14.

D'autres buts, caractéristiques et avantages de l'invention apparaîtront à la lecture de la description suivante donnée à titre non limitatif et qui se réfère aux figures annexées dans lesquelles :

- la figure 1 est une représentation schématique en coupe d'un détecteur de position conforme à l'invention,
- la figure 2 est un schéma synoptique fonctionnel d'un procédé de fonctionnement d'un détecteur de position conforme à la figure 1,
- la figure 3 correspond à une représentation schématique de l'accélération selon un axe x d'un détecteur de déplacement selon l'invention lors d'un choc, en fonction du temps en abscisses, ainsi que d'acquisitions de signaux réalisées par un détecteur de déplacement selon l'invention lors d'un tel événement de déclenchement.

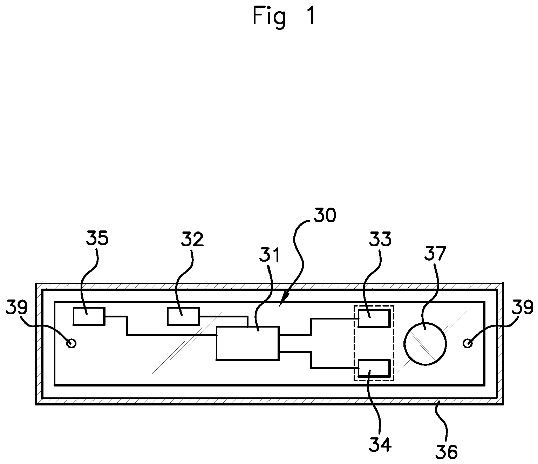

Un détecteur de déplacement 30 d'un dispositif domotique selon l'invention comprend un boîtier 36 dans lequel est disposé un circuit électronique comprenant une unité de traitement 31 de signaux et de données. L'unité de traitement 31 est reliée à un capteur d'orientation comprenant un magnétomètre 34. L'unité de traitement est aussi reliée à un accéléromètre 33. Dans le mode de réalisation particulier présenté en figure 1 le magnétomètre 34 et l'accéléromètre 33 peuvent être réunis sur une même puce électronique.

Le magnétomètre 34 est un magnétomètre trois axes qui fournit des signaux, dits signaux d'orientation, représentatifs de l'intensité instantanée du champ magnétique local selon ses trois directions de mesure, fixes par rapport au boîtier 36 du détecteur de déplacement 30. En général le champ magnétique local est le champ magnétique terrestre local, à moins qu'un aimant puissant ait été disposé à proximité de façon volontaire, ce qui peut être avantageux par exemple pour détecter la position d'un ouvrant coulissant.

L'unité de traitement 31 est en outre reliée à une mémoire 32 adaptée pour pouvoir stocker des données numériques.

La mémoire 32 est adaptée pour stocker des données représentatives d'au moins trois valeurs d'intensité du champ magnétique (un pour chaque axe de mesure du magnétomètre 34), notamment correspondant à une orientation initiale. La mémoire 32 est adaptée pour stocker des données représentatives d'au moins trois valeurs d'accélération correspondant aux valeurs REFx, REFy, REFz de la gravité locale selon chacun des axes de mesure d'un accéléromètre à trois axes de mesure.

La mémoire 32 peut être du type mémoire vive, mémoire morte, ou avantageusement une combinaison de ces deux types de mémoire.

L'unité de traitement 31 est en outre reliée à un module radio 35 comprenant une antenne adaptée pour pouvoir émettre des signaux sans fil radiofréquences, par exemple selon le protocole Wifi®.

Le détecteur de déplacement 30 comprend aussi une pile 37 reliée de façon appropriée à chacun des composants du circuit électronique pour les alimenter en énergie électrique.

Le circuit électronique est fixé au boîtier 36, par exemple par des vis 39 ou par des bouterolles.

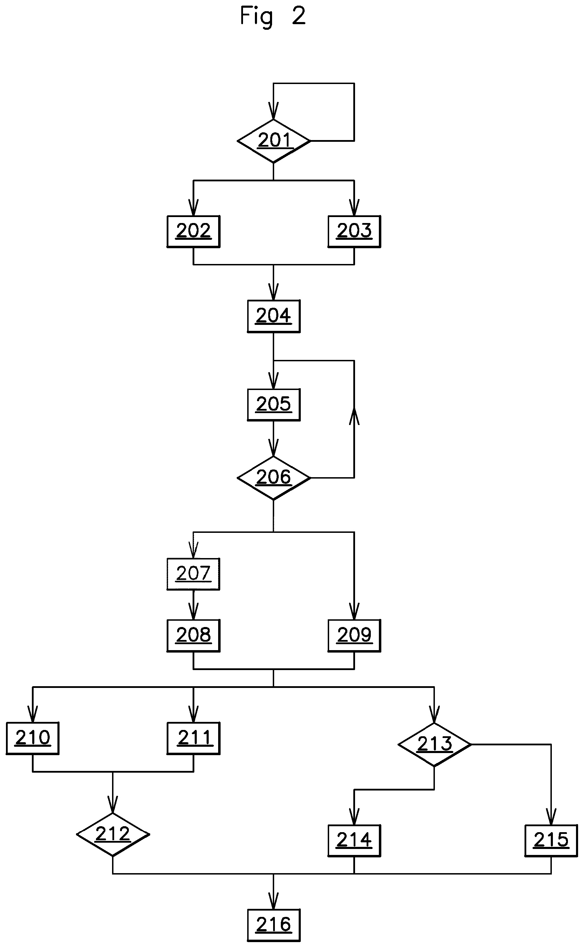

La figure 2 représente un schéma synoptique fonctionnel simplifié du fonctionnement d'un détecteur de déplacement selon l'invention, par exemple tel que présenté en figure 1.

À l'étape 201, dans un détecteur de déplacement selon l'invention, l'unité de traitement 31 :

- acquiert à une fréquence fA1 les signaux d'accélération fournis par l'accéléromètre 33 représentatifs de valeurs d'accélération sur chaque axe de mesure,
- calcule une différence entre la valeur de l'accélération sur chaque axe de mesure et une valeur de référence REFx, REFy, REFz de la gravité locale,
- compare la valeur absolue de cette différence à des valeurs, dites valeurs de déclenchement, enregistrées en mémoire 32.

En particulier, l'unité de traitement 31 compare les valeurs d'accélération corrigées de la gravité, représentées par les signaux d'accélération sur chaque axe de mesure de l'accéléromètre 33 trois-axes, à trois valeurs de déclenchement correspondant à chaque axe de mesure. Les valeurs de déclenchement sont par exemple choisies pour que les accélérations dues à des vibrations courantes d'un ouvrant fermé sur son dormant telles que celles provoquées par le vent ou par des personnes se déplaçant à proximité soient en valeur absolue en dessous du seuil de détection d'un événement de déclenchement fixé par la valeur de déclenchement.

Si l'une des valeurs d'accélération corrigée de la gravité selon un axe au moins est supérieure à une valeur de déclenchement enregistrée, l'unité de traitement passe aux étapes 202 et 203. Sinon l'unité de traitement poursuit l'étape 201.

L'étape 201 correspond donc à une surveillance périodique de l'accélération d'un objet surveillé.

À l'étape 202, l'unité de traitement passe d'une fréquence d'accélération fA1 d'acquisition des signaux d'accélération fournis par l'accéléromètre 33 à une fréquence d'alerte fA2, supérieure à fA1, d'acquisition des signaux d'accélération. La fréquence d'accélération fA1 est par exemple avantageusement de l'ordre de 5 Hz, tandis que la fréquence d'alerte fA2 est par exemple avantageusement de l'ordre de 50 Hz. À partir de l'étape 202, les signaux d'accélération sont avantageusement enregistrés en mémoire. Après l'étape 202, l'unité de traitement passe à l'étape 204.

À l'étape 203, l'unité de traitement :

- passe d'une fréquence basse fM1 d'acquisition des signaux d'orientation fournis par le magnétomètre 34 à une fréquence haute fM2, supérieure à fM1, d'acquisition des signaux d'orientation.
- acquiert, à la fréquence haute, des signaux d'orientation correspondants à au moins quatre valeurs instantanées successives d'intensité du champ magnétique local selon chaque direction de mesure du magnétomètre 34,
- détermine une orientation, dite orientation initiale, du boîtier 36, à partir de la moyenne des quatre valeurs d'orientation selon chaque direction précédemment acquises, par rapport à une orientation de référence,
- repasse de la fréquence haute fM2 d'acquisition des signaux d'orientation à la fréquence basse fM1 d'acquisition des signaux d'orientation.

La fréquence fM1 est par exemple avantageusement de l'ordre de 0.2 Hz, tandis que la fréquence fM2 est par exemple avantageusement de l'ordre de 50 Hz.

L'orientation initiale est enregistrée en mémoire, par exemple sous forme de valeur d'un angle. Dans le cas d'un objet surveillé qui est un ouvrant, l'orientation de référence correspond par exemple à une position fermée de l'ouvrant sur son dormant. L'orientation initiale est déterminée par rapport à cette orientation de référence, c'est avantageusement un angle par rapport à cette orientation de référence, notamment dans le cas d'ouvrants battants.

L'unité de traitement passe ensuite à l'étape 204.

À l'étape 204, l'unité de traitement 31 déclenche un chronomètre puis passe à l'étape 205.

À l'étape 205, l'unité de traitement acquiert les signaux d'accélération fournis par l'accéléromètre à la fréquence fA2.

L'unité de traitement passe ensuite à l'étape 206.

À l'étape 206, l'unité de traitement compare la valeur du chronomètre enclenché à l'étape 204 avec une valeur de durée déterminée, dite durée d'attente, enregistré en mémoire 32. Dans cet exemple ladite durée d'attente est égale à ladite durée de calcul. Tant que cette durée d'attente n'est pas écoulée, l'unité de traitement continue d'acquérir des signaux d'accélération (étape 205).

Lorsque la durée d'attente est écoulée, l'unité de traitement passe aux étapes 207 et 209.

À l'étape 207, l'unité de traitement calcule une valeur, dite énergie de déplacement, à partir des signaux d'accélération acquis à l'étape 205 selon chaque axe dudit accéléromètre.

Puis l'unité de traitement enregistre dans une mémoire 32 la valeur d'énergie de déplacement ainsi déterminée.

L'unité de traitement passe ensuite à l'étape 208.

À l'étape 208, l'unité de traitement repasse de la fréquence d'alerte fA2 à la fréquence d'accélération fA1 pour l'acquisition des signaux d'accélération, puis passe aux étapes 210, 211, 213.

À l'étape 209, l'unité de traitement :

- passe de la fréquence basse fM1 à la fréquence haute fM2 d'acquisition des signaux d'orientation,
- acquiert, à la fréquence haute, des signaux d'orientation correspondants à au moins quatre valeurs instantanées successives d'intensité du champ magnétique local selon chaque direction de mesure du magnétomètre 34,
- détermine une orientation, dite orientation finale, du boîtier 36, à partir de la moyenne des quatre valeurs d'orientation selon chaque direction précédemment acquises, par rapport à une orientation de référence,
- repasse de la fréquence haute fM2 d'acquisition des signaux d'orientation à la fréquence basse fM1 d'acquisition des signaux d'orientation.

L'orientation finale est enregistrée en mémoire, par exemple sous forme de valeur d'un angle. Dans le cas d'un objet surveillé qui est un ouvrant, l'orientation de référence correspond par exemple à une position fermée de l'ouvrant sur son dormant. L'orientation initiale est déterminée par rapport à cette orientation de référence, c'est avantageusement un angle par rapport à cette orientation de référence, notamment dans le cas d'ouvrants battants.

L'unité de traitement passe ensuite aux étapes 210, 211, 213. À l'étape 210, l'unité de traitement 31 compare l'énergie de déplacement calculée à l'étape 207 par rapport à au moins une valeur, dite valeur de graduation, enregistrée en mémoire 32. Les valeurs de graduation sont choisies pour que des énergies de déplacement inférieures auxdites valeurs de graduation correspondent à des accélérations ou à des chocs jugés normaux pour ledit battant surveillé : par exemple de petits déplacements provoqués par le vent sur un battant monté avec un jeu non-nul. Avantageusement, l'unité de traitement comprend plusieurs valeurs de graduation, de façon à pouvoir déterminer le niveau d'un ou plusieurs chocs et/ou accélérations reçus par l'objet surveillé. Par exemple la mémoire comprend neuf valeurs de graduation distinctes, de façon à pouvoir déterminer dix niveaux d'énergie de déplacement. Avantageusement au moins l'une des valeurs de graduation est représentative d'une situation dans laquelle l'objet surveillé a été déplacé - notamment dans le cas d'un ouvrant à une situation dans laquelle l'ouvrant a été ouvert par effraction.

L'unité de traitement passe ensuite à l'étape 212.

À l'étape 211, l'unité de traitement compare l'orientation finale et l'orientation initiale, par différence entre orientation finale et orientation initiale.

La différence peut être nulle : c'est-à-dire que soit l'objet ne s'est pas déplacé malgré l'accélération mesurée. C'est par exemple le cas lors de choc d'effraction sur un ouvrant qui ne conduit pas à son ouverture. La différence peut être positive ou négative : c'est-à-dire que l'objet surveillé a été déplacé. Dans le cas d'un ouvrant, le signe de cette différence permet de savoir si l'ouvrant est passé d'une position ouverte à une position fermée ou d'une position fermée à une position ouverte, notamment lorsqu'une position de référence correspondant à une position fermée est enregistrée en mémoire.

L'unité de traitement passe ensuite à l'étape 212.

À l'étape 212, l'unité de traitement compare le résultat de la comparaison de l'énergie de déplacement à des valeurs de graduation et le résultat de la différence entre orientation finale et orientation initiale. Cette étape permet de corréler le résultat du calcul de ladite énergie de déplacement avec les mesures de position initiale et finale de l'objet surveillé. Ainsi, cette étape permet de vérifier que :

- l'objet surveillé n'a pas été déplacé, l'énergie de déplacement n'étant pas de valeur suffisamment importante pour être représentative d'une ou plusieurs accélérations (et/ou chocs) ayant conduit au déplacement de l'objet surveillé, et la différence entre orientation finale et orientation initiale étant inférieure à un seuil prédéterminé,
- l'objet surveillé a été déplacé, l'énergie de déplacement étant de valeur suffisamment importante pour être représentative d'une ou plusieurs accélérations (et/ou chocs) ayant conduit au déplacement de l'objet surveillé, et la différence entre orientation finale et orientation initiale étant supérieure à un seuil prédéterminé.

L'unité de traitement passe ensuite à l'étape 216.

À l'étape 213, l'unité de traitement vérifie en mémoire la position de l'objet surveillé qui était enregistrée en mémoire avant l'étape 201. Dans le cas d'un ouvrant, cela correspond par exemple à l'état « ouvert » ou « fermé » de l'ouvrant. Si l'objet surveillé était en position de référence (état « fermé » d'un ouvrant) l'unité de traitement passe à l'étape 215. Si l'objet surveillé était hors position de référence (état « ouvert » d'un ouvrant) l'unité de traitement passe à l'étape 214.

À l'étape 214, l'unité de traitement compare l'orientation finale à une valeur enregistrée en mémoire en deçà de laquelle l'objet surveillé est considéré être revenu en position de référence. Par exemple dans le cas d'une porte, cette valeur est de l'ordre de 5°.

L'unité de traitement passe ensuite à l'étape 216.

À l'étape 215, l'unité de traitement compare l'orientation finale à une valeur enregistrée en mémoire au-delà de laquelle l'objet surveillé est considéré avoir été déplacé hors position de référence. Par exemple dans le cas d'une porte, cette valeur est de l'ordre de 10°. L'unité de traitement détermine ainsi, à l'étape 214 ou à l'étape 215, si l'objet a changé significativement de position suite au choc détecté à l'étape 201.

L'unité de traitement passe ensuite à l'étape 216.

À l'étape 216, l'unité de traitement élabore un message en fonction des résultats des étapes 212 et 214 ou 215. Un tel message est par exemple émis via l'antenne 35 à destination d'une unité centrale d'un dispositif domotique d'alarme. Le message contient par exemple des informations telles qu'un niveau d'énergie de déplacement et un état représentatif d'une position de l'objet surveillé (état « fermé » ou « ouvert » d'un ouvrant). En fonction du contenu du message et le cas échéant d'un mode de fonctionnement de l'unité centrale, l'unité centrale peut enclencher des moyens d'alarme tels qu'une sirène par exemple.

Dans les rares cas où l'énergie de déplacement est de valeur suffisamment importante pour être représentative d'une ou plusieurs accélérations (et/ou chocs) qui auraient dû conduire au déplacement de l'objet surveillé mais que la différence entre orientation finale et orientation initiale est inférieure à un seuil prédéterminé - c'est-à-dire que l'objet surveillé ne s'est pas déplacé, l'unité centrale déclenche une alarme anti-intrusion, mais peut modifier le niveau du seuil prédéterminé.

L'unité de traitement revient ensuite à l'étape 201.

Un procédé selon l'invention est particulièrement économique en énergie consommée par les composants électroniques. En effet, la plupart des objets surveillés sont immobiles la plupart du temps, de sorte que l'unité de traitement passe la plus grande partie du temps à mener l'étape 201, avec une fréquence d'acquisition fA1 basse, de sorte que la pile 37 est très peu sollicitée. De plus, le magnétomètre ne fonctionne à fréquence haute fM2 que très rarement et sur des durées extrêmement courtes (cf étapes 203 et 209). La durée de vie de la pile 37 est donc allongée grâce à l'invention.

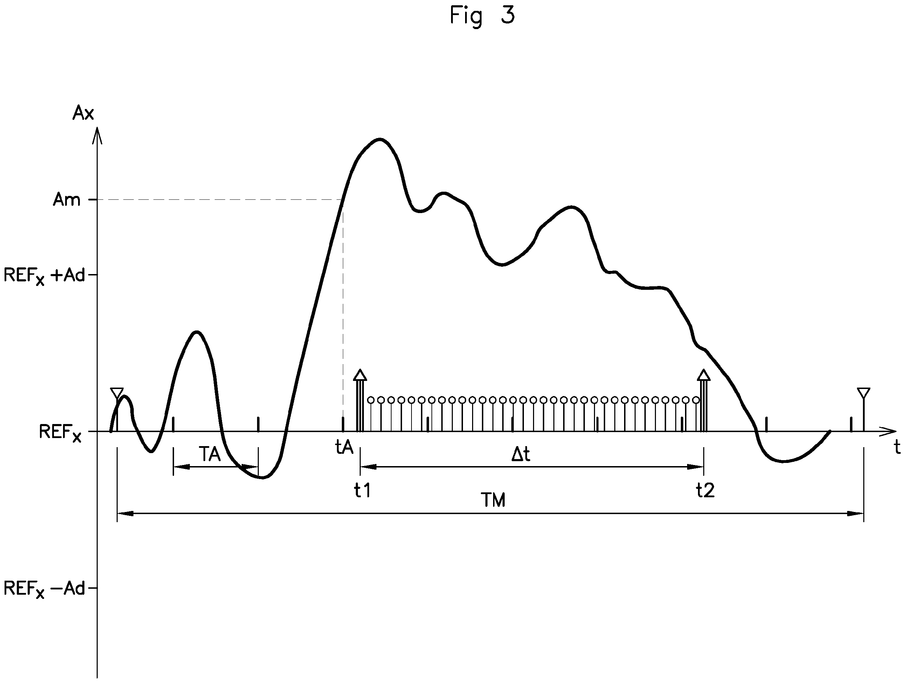

La figure 3 présente un événement de déclenchement tel qu'un choc sur une porte détecté par un détecteur de déplacement d'un dispositif domotique selon l'invention.

En fonctionnement normal, le détecteur de déplacement acquiert :

- des signaux d'accélération à des intervalles de temps $T_A$ ($T_A$=1/fA1) représentés par des bâtonnets courts sur la figure 3,
- des signaux d'orientation à des intervalles de temps $T_M$ ($T_M$=1/FM1) représentés par des bâtonnets longs surmontés d'un triangle vers le bas sur la figure 3.

La fréquence basse fM1 d'acquisition des signaux d'orientation est inférieure à la fréquence d'accélération fA1 d'acquisition des signaux d'accélération.

À l'instant $t_A$ une valeur d'accélération de valeur Am selon un axe de mesure x est détectée, qui est supérieure à la valeur de déclenchement REFx+Ad pour cet axe de mesure x.

Immédiatement après, à l'instant tl, l'unité de traitement acquiert à une fréquence haute fM2 une pluralité de signaux d'orientation successifs - indépendamment de la période d'acquisition TM liée à la fréquence basse fM1 - et détermine une orientation initiale θ1 de la porte. Ces acquisitions sont représentées par un bâtonnet long surmonté d'un triangle vers le haut sur la figure 3.

L'unité de traitement acquiert ensuite des signaux d'accélération à une fréquence d'alerte fA2, les acquisitions à cette fréquence d'alerte fA2 étant représentées par des bâtonnets surmontés d'un rond sur la figure 3. Les signaux d'accélération sont acquis à la fréquence haute fA2 pendant au moins une durée d'attente ΔT s'écoulant à partir de l'instant t1 jusqu'à un instant t2 postérieur.

Cette fréquence d'alerte élevée permet d'obtenir une image fine de l'accélération subie par la porte et le détecteur de déplacement. Sur la figure 3 l'accélération subie par le détecteur de déplacement est représentée par une courbe continue.

La durée de calcul dans cet exemple est égale à la durée d'attente ΔT.

Une fois la durée d'attente ΔT écoulée, l'unité de traitement acquiert, à l'instant t2, à ladite fréquence haute fM2, une pluralité de signaux d'orientation successifs et détermine une orientation finale θ2 de la porte. Ces acquisitions sont représentées par un bâtonnet long surmonté d'un triangle vers le haut sur la figure 3.

L'unité de traitement repasse ensuite à des fréquences d'échantillonnage fM1 (fréquence basse pour les signaux d'orientation) et fA1 (fréquence d'accélération pour les signaux d'accélération).

Les acquisitions de signaux d'accélération pendant la durée d'attente ∆T sont ensuite traités par l'unité de traitement pour calculer une valeur, dite énergie de déplacement.

De même, l'orientation initiale et l'orientation finale peuvent être déterminées par l'unité de traitement après l'instant t2 à partir des signaux d'orientation acquis aux instants t1 et t2.

L'unité de traitement compare ensuite ladite énergie de déplacement à une ou plusieurs valeurs de graduation, ainsi que ladite orientation finale θ2 à ladite orientation initiale θ1.

## Revendications

**1.** - Dispositif domotique comprenant au moins un détecteur de déplacement (20) d'un objet, dit objet surveillé, comprenant :

- un boîtier (36),
- un accéléromètre (33) fixé au boîtier et adapté pour fournir des signaux, dits signaux d'accélération, représentatifs d'une accélération du boîtier (36) selon au moins une direction fixe du boîtier (36),
- un capteur d'orientation (34) fixé au boîtier et adapté pour fournir des signaux, dits signaux d'orientation, représentatifs d'une orientation instantanée d'au moins une direction fixe du boîtier (36),
- une mémoire comprenant des données représentatives :

  • d'au moins une valeur, dite valeur de déclenchement, prédéterminée,
  • d'au moins une valeur, dite valeur de graduation, prédéterminée,

- une unité de traitement (31) des signaux d'accélération et des signaux d'orientation,

**caractérisé en ce que** l'unité de traitement (31) est programmée pour :

- pouvoir identifier un événement, dit événement de déclenchement, prédéterminé représentatif d'une variation de l'accélération du boîtier, au moins à partir des signaux d'accélération et de ladite valeur de déclenchement,
- sur détection d'un événement de déclenchement :

  • acquérir des signaux d'orientation fournis par le capteur d'orientation (34), représentatifs de l'orientation instantanée, dite orientation initiale, du boîtier,
  • effectuer, au moins à partir des signaux d'accélération, un calcul de détermination d'une valeur, dite énergie de déplacement, ledit calcul comprenant au moins une somme temporelle d'accélérations,
  • après écoulement d'une durée déterminée, dite durée d'attente, à partir de l'acquisition de l'orientation initiale, acquérir des signaux d'orientation fournis par le capteur d'orientation (34), représentatifs de l'orientation instantanée, dite orientation finale, du boîtier,
  • comparer ladite énergie de déplacement à ladite valeur de graduation,
  • comparer ladite orientation finale et ladite orientation initiale,
  • effectuer une opération, dite opération de corrélation, comprenant au moins une comparaison du résultat de la comparaison entre orientation finale et orientation initiale, et du résultat de la comparaison entre ladite énergie de déplacement et au moins ladite valeur de graduation.

**2.** - Dispositif selon la revendication 1, **caractérisé en ce que** :

- la mémoire comprend des données représentatives d'une pluralité de valeurs de graduation distinctes prédéterminées,
- l'unité de traitement (31) est programmée pour comparer ladite énergie de déplacement à plusieurs valeurs de graduation.

**3.** - Dispositif selon l'une des revendications 1 ou 2, **caractérisé en ce que** ladite opération de corrélation, comprend au moins une comparaison du résultat de la comparaison entre orientation finale et orientation initiale, et du résultat de la comparaison entre ladite énergie de déplacement et plusieurs valeurs de graduation.

**4.** - Dispositif selon l'une des revendications 1 à 3, **caractérisé en ce que** le calcul de ladite énergie de déplacement comprend :

- une moyenne mobile d'accélération à partir d'une pluralité de signaux d'accélération,
- une différence entre moyenne mobile d'accélération et une valeur, dite valeur continue, prédéterminée enregistrée en mémoire sous forme de données,
- une somme quadratique d'une pluralité de différences entre une pluralité de moyennes mobiles d'accélération décalées dans le temps et ladite valeur continue.

5. - Dispositif selon l'une des revendications 1 à 4, **caractérisé en ce que** l'unité de traitement (31) est programmée pour acquérir :

- des signaux d'accélération fournis par l'accéléromètre (33) à une première fréquence d'échantillonnage, dite fréquence d'accéléromètre,
- des signaux d'orientation fournis par le capteur d'orientation (34) à une deuxième fréquence d'échantillonnage, dite fréquence basse, de valeur inférieure à ladite fréquence d'accéléromètre.

6. - Dispositif selon la revendication 5, **caractérisé en ce que** l'unité de traitement (31) est programmée pour, sur détection d'un événement de déclenchement, acquérir des signaux d'orientation fournis par le capteur d'orientation (34) à une troisième fréquence d'échantillonnage, dite fréquence haute, de valeur supérieure à ladite fréquence basse.

7. - Dispositif selon l'une des revendications 5 ou 6, **caractérisé en ce que** l'unité de traitement (31) est programmée pour, sur détection d'un événement de déclenchement, acquérir des signaux d'accélération fournis par l'accéléromètre (33) à une quatrième fréquence d'échantillonnage, dite fréquence d'alerte, de valeur supérieure à ladite fréquence d'accéléromètre.

8. - Dispositif selon l'une des revendications 1 à 7, **caractérisé en ce que** le capteur d'orientation comprend un magnétomètre (34) fixé au boîtier (36) et adapté pour fournir des signaux d'orientation représentatifs de l'orientation instantanée d'au moins une direction fixe du boîtier (36) par rapport à un champ magnétique terrestre local.

9. - Dispositif selon l'une des revendications 1 à 8, **caractérisé en ce que** l'accéléromètre (33) est un accéléromètre trois axes adapté pour fournir des signaux d'accélération représentatifs de mesures d'accélérations instantanées du boîtier (36) dans un référentiel terrestre.

10. - Dispositif selon l'une des revendications 1 à 9, **caractérisé en ce que** ladite valeur de graduation est adaptée pour qu'une valeur d'énergie de déplacement supérieure à ladite valeur de graduation corresponde à un choc d'une intensité donnée sur l'objet surveillé.

11. - Procédé de fonctionnement d'un détecteur de déplacement d'un objet, dit objet surveillé, ledit détecteur de déplacement comprenant :

- un boîtier (36),
- un accéléromètre (33) fixé au boîtier et adapté pour fournir des signaux, dits signaux d'accélération, représentatifs d'une accélération du boîtier (36) selon au moins une direction fixe du boîtier (36),
- un capteur d'orientation (34) fixé au boîtier et adapté pour fournir des signaux, dits signaux d'orientation, représentatifs de l'orientation instantanée d'au moins une direction fixe du boîtier (36),
- une mémoire comprenant des données représentatives :

  • d'au moins une valeur, dite valeur de déclenchement, prédéterminée,
  • d'au moins une valeur, dite valeur de graduation, prédéterminée,

- une unité de traitement (31) des signaux d'accélération et des signaux d'orientation,

**caractérisé en ce que** l'unité de traitement (31) :

- traite les signaux d'accélération de façon à pouvoir, avec ladite valeur de déclenchement, identifier un événement, dit événement de déclenchement, prédéterminé représentatif d'une variation de l'accélération du boîtier,
- sur détection d'un événement de déclenchement :

• acquiert des signaux d'orientation fournis par le capteur d'orientation (34), représentatifs de l'orientation instantanée, dite orientation initiale, du boîtier,

• effectue, au moins à partir des signaux d'accélération, un calcul de détermination d'une valeur, dite énergie de déplacement, ledit calcul comprenant au moins une somme temporelle d'accélérations,

• après écoulement d'une durée déterminée, dite durée d'attente, à partir de l'acquisition de l'orientation initiale, acquiert des signaux d'orientation fournis par le capteur d'orientation (34), représentatifs de l'orientation instantanée, dite orientation finale, du boîtier,

• compare ladite énergie de déplacement à ladite valeur de graduation,

• compare ladite orientation finale et ladite orientation initiale,

• effectue une opération, dite opération de corrélation, comprenant au moins une comparaison du résultat de la comparaison entre orientation finale et orientation initiale, et du résultat de la comparaison entre ladite énergie de déplacement et au moins ladite valeur de graduation.

**12.** - Procédé selon la revendication 11, **caractérisé en ce que**, l'unité de traitement (31) acquiert :

- des signaux d'accélération fournis par l'accéléromètre (33) à une première fréquence d'échantillonnage, dite fréquence d'accéléromètre,
- des signaux d'orientation fournis par le capteur d'orientation (34) à une deuxième fréquence d'échantillonnage, dite fréquence basse, de valeur inférieure à ladite fréquence d'accéléromètre.

**13.** - Procédé selon la revendication 12, **caractérisé en ce que**, immédiatement après détection d'une valeur d'accélération supérieure à ladite valeur de déclenchement, l'unité de traitement (31) acquiert des signaux d'orientation fournis par le capteur d'orientation (34) à une troisième fréquence d'échantillonnage, dite fréquence haute, de valeur supérieure à ladite fréquence basse.

**14.** - Programme d'ordinateur comprenant des instructions de code de programme pour l'exécution des étapes d'un procédé selon l'une des revendications 11 à 13 lorsque le programme est exécuté sur un ordinateur, notamment sur un dispositif selon l'une des revendications 1 à 10.

**Patentansprüche**

**1.** Domotische Vorrichtung, umfassend mindestens einen Bewegungsdetektor (20) für ein Objekt, das als überwachtes Objekt bezeichnet wird, umfassend:

- ein Gehäuse (36),
- einen Beschleunigungsmesser (33), der an dem Gehäuse befestigt und angepasst ist, um Signale, sogenannte Beschleunigungssignale, bereitzustellen, die repräsentativ für eine Beschleunigung des Gehäuses (36) in mindestens einer festen Richtung des Gehäuses (36) sind,
- einen Ausrichtungssensor (34), der an dem Gehäuse befestigt und angepasst ist, um Signale, sogenannte Ausrichtungssignale, bereitzustellen, die repräsentativ für eine momentane Ausrichtung mindestens einer festen Richtung des Gehäuses (36) sind,
- einen Speicher, umfassend repräsentative Daten:

• von mindestens einem vorbestimmten Wert, der als Auslösewert bezeichnet wird,
• von mindestens einem vorbestimmten Wert, der als Skalierungswert bezeichnet wird,

- eine Verarbeitungseinheit (31) von den Beschleunigungssignalen und den Ausrichtungssignalen,

**dadurch gekennzeichnet, dass** die Verarbeitungseinheit (31) zu Folgendem programmiert ist:

- Identifizieren eines vorbestimmten Ereignisses, das als Auslöseereignis bezeichnet wird, das repräsentativ für eine Änderung der Beschleunigung des Gehäuses ist, mindestens anhand von Beschleunigungssignalen und des Auslösewerts,
- bei Erkennung eines Auslöseereignisses:

• Erfassen von Ausrichtungssignalen, die von dem Ausrichtungssensor (34) bereitgestellt werden, die repräsentativ für die momentane Ausrichtung, die Anfangsausrichtung, des Gehäuses sind,

• Durchführen, mindestens anhand von Beschleunigungssignalen, einer Bestimmungsberechnung eines Werts, der als Bewegungsenergie bezeichnet wird, die Berechnung umfassend mindestens eine zeitliche Summe von Beschleunigungen,

• nach Ablauf einer bestimmten Dauer, die als Wartezeit bezeichnet wird, anhand der Erfassung der Anfangsausrichtung, Erfassen von Ausrichtungssignalen, die von dem Ausrichtungssensor (34) bereitgestellt werden, die repräsentativ für die momentane Ausrichtung, die als Endausrichtung bezeichnet wird, des Gehäuses sind,

• Vergleichen der Bewegungsenergie mit dem Skalierungswert,

• Vergleichen der Endausrichtung und der Anfangsausrichtung,

• Durchführen eines Vorgangs, der als Korrelationsvorgang bezeichnet wird, umfassend mindestens einen Vergleich des Resultats des Vergleichs zwischen Endausrichtung und Anfangsausrichtung und des Resultats des Vergleichs zwischen der Bewegungsenergie und mindestens dem Skalierungswert.

2. Verfahren gemäß Anspruch 1, **dadurch gekennzeichnet, dass**:

- der Speicher Daten umfasst, die repräsentativ für eine Vielzahl von vorbestimmten, unterschiedlichen Skalierungswerten sind,
- die Verarbeitungseinheit (31) programmiert ist, um die Bewegungsenergie mit mehreren Skalierungswerten zu vergleichen.

3. Vorrichtung nach einem der Ansprüche 1 oder 2, **dadurch gekennzeichnet, dass** der Korrelationsvorgang mindestens einen Vergleich des Resultats des Vergleichs zwischen Endausrichtung und Anfangsausrichtung und des Resultats des Vergleichs zwischen der Bewegungsenergie und mehreren Skalierungswerten umfasst.

4. Vorrichtung nach einem der Ansprüche 1 bis 3, **dadurch gekennzeichnet, dass** die Berechnung der Bewegungsenergie Folgendes umfasst:

- einen gleitenden Beschleunigungsdurchschnitt aus einer Vielzahl von Beschleunigungssignalen,
- eine Differenz zwischen gleitendem Beschleunigungsdurchschnitt und einem vorbestimmten Wert, der als kontinuierlicher Wert bezeichnet wird, der in Form von Daten in dem Speicher gespeichert ist,
- eine quadratische Summe einer Vielzahl von Differenzen zwischen einer Vielzahl von zeitlich versetzten gleitenden Mittelwerten der Beschleunigung und dem kontinuierlichen Wert.

5. Vorrichtung nach einem der Ansprüche 1 bis 4, **dadurch gekennzeichnet, dass** die Verarbeitungseinheit (31) programmiert ist, um Folgendes zu erfassen:

- Beschleunigungssignale, die von dem Beschleunigungsmesser (33) mit einer ersten Abtastfrequenz, die als Beschleunigungsmesserfrequenz bezeichnet wird, bereitgestellt werden,
- Ausrichtungssignale, die von dem Ausrichtungssensor (34) mit einer zweiten Abtastfrequenz, die als niedrige Frequenz bezeichnet wird, bereitgestellt werden, die einen niedrigeren Wert als die Beschleunigungsmesserfrequenz aufweist.

6. Vorrichtung nach Anspruch 5, **dadurch gekennzeichnet, dass** die Verarbeitungseinheit (31) programmiert ist, um bei Erkennung eines Auslöseereignisses Ausrichtungssignale zu erfassen, die von dem Ausrichtungssensor (34) mit einer dritten Abtastfrequenz, der sogenannten Hochfrequenz, bereitgestellt werden, deren Wert höher ist als die niedrige Frequenz.

7. Vorrichtung nach einem der Ansprüche 5 oder 6, **dadurch gekennzeichnet, dass** die Verarbeitungseinheit (31) programmiert ist, um bei Erkennung eines Auslöseereignisses Beschleunigungssignale zu erfassen, die von dem Beschleunigungsmesser (33) mit einer vierten Abtastfrequenz, die als Warnsequenz bezeichnet wird, bereitgestellt werden, deren Wert höher ist als die Beschleunigungsmesserfrequenz.

8. Vorrichtung nach einem der Ansprüche 1 bis 7, **dadurch gekennzeichnet, dass** der Ausrichtungssensor ein Magnetometer (34) umfasst, das an dem Gehäuse (36) befestigt angepasst ist, um Ausrichtungssignale bereitzustellen, die repräsentativ für die momentane Ausrichtung mindestens einer festen Richtung des Gehäuses (36) in Bezug auf ein lokales Erdmagnetfeld sind.

9. Vorrichtung nach einem der Ansprüche 1 bis 8, **dadurch gekennzeichnet, dass** der Beschleunigungsmesser (33) ein Drei-Achsen-Beschleunigungsmesser ist, der angepasst ist, um Beschleunigungssignale bereitzustellen, die repräsentativ für Messungen der momentanen Beschleunigungen des Gehäuses (36) in einem Erdbezugssystem sind.

10. Vorrichtung nach einem der Ansprüche 1 bis 9, **dadurch gekennzeichnet, dass** der Skalierungswert angepasst ist, um einen Wert der Bewegungsenergie, der größer ist als der Skalierungswert, einem Stoß einer gegebenen Intensität auf das überwachte Objekt entspricht.

11. Betriebsverfahren eines Bewegungsdetektors für ein Objekt, das als überwachtes Objekt bezeichnet wird, der Bewegungsdetektor umfassend:

- ein Gehäuse (36),
- einen Beschleunigungsmesser (33), der an dem Gehäuse befestigt und angepasst ist, um Signale, sogenannte Beschleunigungssignale, bereitzustellen, die repräsentativ für eine Beschleunigung des Gehäuses (36) in mindestens einer festen Richtung des Gehäuses (36) sind,
- einen Ausrichtungssensor (34), der an dem Gehäuse befestigt und angepasst ist, um Signale, sogenannte Ausrichtungssignale, bereitzustellen, die repräsentativ für die momentane Ausrichtung mindestens einer festen Richtung des Gehäuses (36) sind,
- einen Speicher, umfassend repräsentative Daten:

  • von mindestens einem vorbestimmten Wert, der als Auslösewert bezeichnet wird,
  • von mindestens einem vorbestimmten Wert, der als Skalierungswert bezeichnet wird,

- eine Verarbeitungseinheit (31) von Beschleunigungssignalen und die Ausrichtungssignalen,

**dadurch gekennzeichnet, dass** die Verarbeitungseinheit (31):

- die Beschleunigungssignale auf eine Weise verarbeitet, um, mit dem Auslösewert, ein vorbestimmtes Ereignis, das als Auslöseereignis bezeichnet wird, identifizieren zu können, das repräsentativ für eine Änderung der Beschleunigung des Gehäuses ist,
- bei Erkennung eines Auslöseereignisses:

  • Ausrichtungssignale erfasst, die von dem Ausrichtungssensor (34) bereitgestellt werden, die repräsentativ für die momentane Ausrichtung, die Anfangsausrichtung, des Gehäuses sind,
  • mindestens anhand von Beschleunigungssignalen, eine Bestimmungsberechnung eines Werts durchführt, der als Bewegungsenergie bezeichnet wird, die Berechnung umfassend mindestens eine zeitliche Summe von Beschleunigungen,
  • nach Ablauf einer bestimmten Dauer, die als Wartezeit bezeichnet wird, anhand der Erfassung der Anfangsausrichtung, Ausrichtungssignale erfasst, die von dem Ausrichtungssensor (34) bereitgestellt werden, die repräsentativ für die momentane Ausrichtung, die als Endausrichtung bezeichnet wird, des Gehäuses sind,
  • die Bewegungsenergie mit dem Skalierungswert vergleicht,
  • die Endausrichtung und die Anfangsausrichtung vergleicht,
  • einen Vorgang durchführt, der als Korrelationsvorgang bezeichnet wird, umfassend mindestens einen Vergleich des Resultats des Vergleichs zwischen Endausrichtung und Anfangsausrichtung und des Resultats des Vergleichs zwischen der Bewegungsenergie und mindestens dem Skalierungswert.

12. Verfahren gemäß Anspruch 11, **dadurch gekennzeichnet, dass** die Verarbeitungseinheit (31) Folgendes erfasst:

- Beschleunigungssignale, die von dem Beschleunigungsmesser (33) mit einer ersten Abtastfrequenz, die als Beschleunigungsmesserfrequenz bezeichnet wird, bereitgestellt werden,
- Ausrichtungssignale, die von dem Ausrichtungssensor (34) mit einer zweiten Abtastfrequenz, die als niedrige Frequenz bezeichnet wird, bereitgestellt werden, die einen niedrigeren Wert als die Beschleunigungsmesserfrequenz aufweist.

13. Verfahren nach Anspruch 12, **dadurch gekennzeichnet, dass** die Verarbeitungseinheit (31) unmittelbar nach Erfassung eines Beschleunigungswerts, der größer ist als der Auslösewert, Ausrichtungssignale erfasst, die von dem Ausrichtungssensor (34) mit einer dritten Abtastfrequenz, die als hohe Frequenz bezeichnet wird, bereitgestellt werden, deren Wert größer als die niedrige Frequenz ist.

14. Computerprogramm, umfassend Programmcodeanweisungen zur Ausführung der Schritte eines Verfahrens nach einem der Ansprüche 11 bis 13, wenn das Programm auf einem Computer, insbesondere auf einer Vorrichtung nach einem der Ansprüche 1 bis 10, ausgeführt wird.

**Claims**

1. Home-automation device comprising at least one displacement detector (20) for an object, named monitored object, comprising:

   - a housing (36),
   - an accelerometer (33) fixed to the housing and adapted to provide signals, named acceleration signals, representing an acceleration of the housing (36) in at least one fixed direction of the housing (36),
   - an orientation sensor (34) fixed to the housing and adapted to provide signals, named orientation signals, representing a instantaneous orientation of at least one fixed direction of the housing (36),
   - a memory comprising data representing:

     • at least one predetermined value, named triggering value,
     • at least one predetermined value, named scaling value,

   - a processing unit (31) for the acceleration signals and orientation signals,

   **characterized in that** the processing unit (31) is programmed to:

   - be able to identify a predetermined event, named triggering event, representing a variation in the acceleration of the housing, at least from the acceleration signals and said triggering value,
   - upon detection of a triggering event:

     • acquire orientation signals provided by the orientation sensor (34), representing the instantaneous orientation, called initial orientation, of the housing,
     • perform, at least from the acceleration signals, a calculation for determining a value, named displacement energy, said calculation comprising at least one sum of accelerations over time,
     • after a set time, named waiting time, from the acquiring of the initial orientation, acquire orientation signals provided by the orientation sensor (34) representing the instantaneous orientation, named final orientation, of the housing,
     • compare said displacement energy to said scaling value,
     • compare said final orientation and said initial orientation,
     • perform an operation, named correlating operation, comprising at least one comparison of the result of the comparison between the final orientation and the initial orientation, and the result of the comparison between said displacement energy and at least said scaling value.

2. Device according to claim 1, **characterized in that**:

   - the memory comprises data representing a plurality of predetermined distinct scaling values,
   - the processing unit (31) is programmed to compare said displacement energy with several scaling values.

3. Device according to one of claims 1 or 2, **characterized in that** said correlating operation, comprises at least one comparison of the result of the comparison between the final orientation and the initial orientation, and the result of the comparison between said displacement energy and several of scaling values.

4. Device according to one of claims 1 to 3, **characterized in that** calculating said displacement energy comprises:

   - a moving acceleration average from a plurality of acceleration signals,
   - a difference between the moving acceleration average and a predetermined value, named continuous value, stored in the memory in the form of data,
   - a quadratic sum of a plurality of differences between a plurality of time-offset moving acceleration averages and said continuous value.

5. Device according to one of claims 1 to 4, **characterized in that** the processing unit (31) is programmed to acquire:

   - acceleration signals provided by the accelerometer (33) at a first sampling rate, named accelerometer rate,
   - orientation signals provided by the orientation sensor (34) at a second sampling rate, named low rate, with a value less than said accelerometer rate.

6. Device according to claim 5, **characterized in that** the processing unit (31) is programmed to acquire, upon detection of a triggering event, orientation signals provided by the orientation sensor (34) at a third sampling rate, named high rate, with a value greater than said low rate.

7. Device according to one of claims 5 or 6, **characterized in that** the processing unit (31) is programmed to acquire, upon detection of a triggering event, acceleration signals provided by the accelerometer (33) at a fourth sampling rate, named alert rate, with a value greater than said accelerometer rate.

8. Device according to one of claims 1 to 7, **characterized in that** the orientation sensor comprises a magnetometer (34) fixed to the housing (36) and adapted to provide orientation signals representing the instantaneous orientation of at least one fixed direction of the housing (36) with respect to a local terrestrial magnetic field.

9. Device according to one of claims 1 to 8, **characterized in that** the accelerometer (33) is an accelerometer with three axes adapted to provide the acceleration signals representing instantaneous acceleration measurements of the housing (36) with a reference to Earth.

10. Device according to one of claims 1 to 9, **characterized in that** said scaling value is adapted such that a displacement energy value greater than said scaling value corresponds to an impact of a given intensity on the monitored object.

11. Method for operating a displacement detector for an object, named monitored object, said displacement detector comprising:

    - a housing (36),
    - an accelerometer (33) fixed to the housing and adapted to provide signals, named acceleration signals, representing an acceleration of the housing (36) in at least one fixed direction of the housing (36),
    - an orientation sensor (34) fixed to the housing and adapted to provide signals, named orientation signals, representing the instantaneous orientation of at least one fixed direction of the housing (36),
    - a memory comprising data representing:

      • at least one predetermined value, named triggering value,
      • at least one predetermined value, named scaling value,

    - a processing unit (31) for the acceleration signals and orientation signals,

    **characterized in that** the processing unit (31):

    - processes the acceleration signals so as to be able to identify, using said triggering value, a predetermined event, named triggering event, representing a variation in the acceleration of the housing,
    - upon detection of a triggering event:

      • acquires orientation signals provided by the orientation sensor (34), representing the instantaneous orientation, called initial orientation, of the housing
      • performs, at least from the acceleration signals, a calculation for determining a value, named displacement energy, said calculation comprising at least one sum of accelerations over time,
      • after a set time, named waiting time, from the acquiring of the initial orientation, acquires orientation signals provided by the orientation sensor (34) representing the instantaneous orientation, named final orientation, of the housing,
      • compares said displacement energy to said scaling value,
      • compares said final orientation and said initial orientation,
      • performs an operation, named correlating operation, comprising at least one comparison of the result of the comparison between the final orientation and the initial orientation, and the result of the comparison between said displacement energy and at least said scaling value..

12. Method according to claim 11, **characterized in that**, the processing unit (31) acquires:

- acceleration signals provided by the accelerometer (33) at a first sampling rate, named accelerometer rate,
- orientation signals provided by the orientation sensor (34) at a second sampling rate, named low rate, with a value less than said accelerometer rate.

13. Method according to claim 12, **characterized in that**, immediately after detection of an acceleration value greater than said triggering value, the processing unit (31) acquires orientation signals provided by the orientation sensor (34) at a third sampling rate, named high rate, with a value greater than said low rate.

14. Computer program comprising program code instructions for performing the steps of a method according to claims 11 to 13 when the program is run by a computer, in particular by a device according to claims 1 to 10.

Fig 1

# Fig 2

Fig 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007048908 A
- US 20100019902 A
- EP 1981010 A
- US 20130057405 A
- US 6940405 B